(19) Europäisches Patentamt
European Patent Office
Office européen des brevets

(11) **EP 2 936 135 B1**

(12) **FASCICULE DE BREVET EUROPEEN**

(45) Date de publication et mention
de la délivrance du brevet:
**20.11.2019 Bulletin 2019/47**

(21) Numéro de dépôt: **13814898.6**

(22) Date de dépôt: **19.12.2013**

(51) Int Cl.:
*G01N 27/90* [(2006.01)]    *F22B 37/00* [(2006.01)]
*G21C 17/017* [(2006.01)]

(86) Numéro de dépôt international:
**PCT/EP2013/077341**

(87) Numéro de publication internationale:
**WO 2014/096168 (26.06.2014 Gazette 2014/26)**

(54) **PROCÉDÉ D'ÉVALUATION DU COLMATAGE D'UN ÉCHANGEUR THERMIQUE**

VERFAHREN ZUR BEWERTUNG DER VERSTOPFUNG EINES WÄRMETAUSCHERS

METHOD FOR EVALUATING THE CLOGGING OF A HEAT EXCHANGER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2012 FR 1262330**

(43) Date de publication de la demande:
**28.10.2015 Bulletin 2015/44**

(73) Titulaire: **Electricité de France**
**75008 Paris (FR)**

(72) Inventeur: **PAUL, Nicolas**
**F-93100 Montreuil (FR)**

(74) Mandataire: **Regimbeau**
**87 rue de Sèze**
**69477 Lyon Cedex 06 (FR)**

(56) Documents cités:
- **Karim Beddek: "Propagation d'incertitudes dans les modèles éléments finis en électromagnétisme - Application au contrôle non destructif par courants de Foucault", Thèse présentée pour l'obtention du titre de docteur de l'Université des Sciences et Technologies de Lille, France , 29 juin 2012 (2012-06-29), pages 93-97, XP055077996, Extrait de l'Internet: URL:http://l2ep.univ-lille1.fr/fileupload/ file/theses/TheseKarimBeddek.pdf [extrait le 2013-09-06]**
- **M. BENTOUMI ET AL: "On-line rail defect diagnosis with differential eddy current probes and specific detection processing", THE EUROPEAN PHYSICAL JOURNAL - APPLIED PHYSICS, vol. 23, no. 3, 30 septembre 2003 (2003-09-30), pages 227-233, XP008167110, DOI: 10.1051/epjap:2003055**
- **L. CHÂTELLIER ET AL: "TUBE SUPPORT PLATE BLOCKAGE EVALUATION WITH TELEVISUAL EXAMINATION AND EDDY CURRENT ANALYSIS", AIP CONFERENCE PROCEEDINGS, vol. 1096, 25 juillet 2008 (2008-07-25), pages 766-773, XP055022381, DOI: 10.1063/1.3114334**
- **P XIANG ET AL: "Automated analysis of rotating probe multi-frequency eddy current data from steam generator tubes", INTERNATIONAL JOURNAL OF APPLIED ELECTROMAGNETICS AND MECHANICS, vol. 12, no. 3,4, 31 December 2000 (2000-12-31), pages 151-164, XP055328574,**

EP 2 936 135 B1

**Description**

DOMAINE TECHNIQUE ET CONTEXTE DE L'INVENTION

La présente invention se rapporte d'une façon générale au domaine de l'inspection des tubes d'un échangeur de chaleur à tubes. Plus précisément, l'invention concerne un procédé d'évaluation du colmatage de passages d'une plaque entretoise d'un échangeur thermique à tubes, lesdits passages étant ménagés le long des tubes et servant à la circulation d'un fluide dans ledit échangeur thermique à travers ladite plaque.

Un générateur de vapeur est généralement composé d'un faisceau de tubes dans lesquels circule le fluide chaud, et autour desquels circule le fluide à chauffer. Par exemple, dans le cas d'un générateur de vapeur d'une centrale nucléaire de type REP, les générateurs de vapeur sont des échangeurs de chaleur qui utilisent l'énergie du circuit primaire issue de la réaction nucléaire pour transformer l'eau du circuit secondaire en vapeur qui alimentera la turbine et ainsi à produire de l'électricité.

Le générateur de vapeur amène le fluide secondaire d'un état d'eau liquide à l'état de vapeur juste en limite de saturation, en utilisant la chaleur de l'eau primaire. Celle-ci circule dans des tubes autour desquels circule l'eau secondaire. La sortie du générateur de vapeur est le point le plus haut en température et pression du circuit secondaire.

La surface d'échange, séparant physiquement les deux circuits, est ainsi constituée d'un faisceau tubulaire, composé de 3500 à 5600 tubes, selon le modèle, dans lesquels circule l'eau primaire portée à haute température (320°C) et haute pression (155bars).

Ces tubes du générateur de vapeur sont maintenus par des plaques entretoises disposées généralement perpendiculairement aux tubes qui les traversent.

Afin de laisser passer le fluide qui se vaporise, les passages de ces plaques entretoises sont foliés, c'est-à-dire que leur forme présente des lobes autour des tubes. Comme l'eau passe de l'état liquide à l'état vapeur, elle dépose toutes les matières qu'elle contenait. Si les dépôts de matière se font dans les lobes, ils diminuent le passage libre : c'est le colmatage, qui est donc l'obturation progressive, par des dépôts, des trous destinés au passage du mélange eau/vapeur.

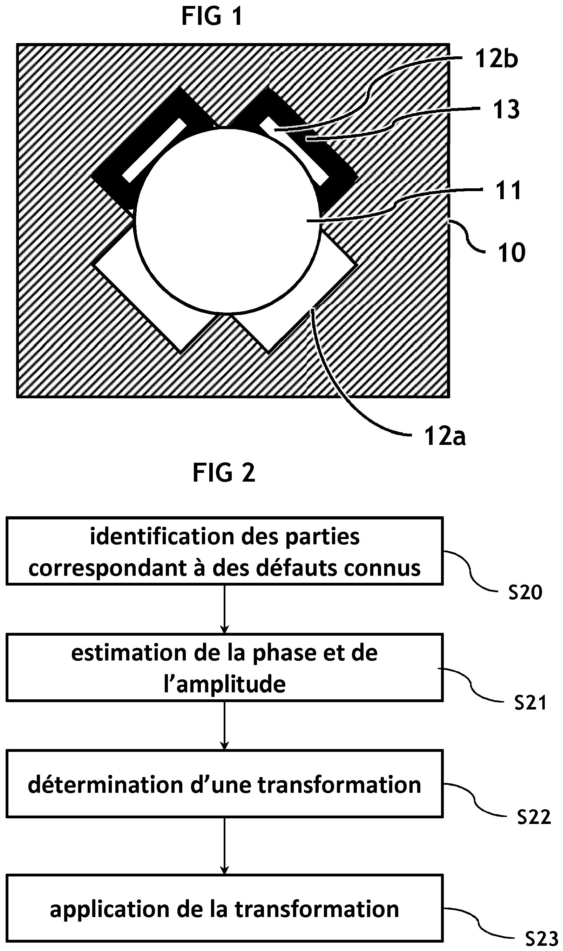

La figure 1 illustre schématiquement une vue de dessus d'un passage folié dans une plaque entretoise 10, dans lequel passe un tube 11. Les lobes 12a et 12b permettent à l'eau de traverser la plaque entretoise 10 le long du tube 11, permettant ainsi la circulation de l'eau dans le générateur de vapeur. Un dépôt 13 est visible au niveau du lobe 12b, colmatant ledit lobe 12b. Le dépôt peut se situer du côté du tube et/ou du côté de la plaque.

Le colmatage conduit à des modifications de l'écoulement de l'eau dans le générateur de vapeur, et ainsi favorise l'apparition de vibrations excessives des tubes, ainsi qu'induire des efforts mécaniques importants sur les structures internes des générateur de vapeur. Cette dégradation a donc des effets à la fois sur la sûreté et sur les performances des installations. Il est donc indispensable de bien connaître la nature et l'évolution de cette dégradation.

Actuellement, le seul système d'examen non destructif qui soit capable d'accéder à la totalité des intersections tubes/plaques entretoises des générateurs de vapeur est la sonde axiale à courant de Foucault (sonde SAX). Un tel exemple de système d'examen est décrit dans le rapport de thèse de Karim Beddek intitulé "Propagation d'incertitudes dans les modèles éléments finis en électromagnétisme Application au contrôle non destructif par courants de Foucault" (2012). Les courants de Foucault apparaissent dans un matériau conducteur lorsque l'on fait varier le flux magnétique à proximité. On fait ainsi circuler dans un tube dudit échangeur une sonde à courant de Foucault multifréquence et on mesure avec celle-ci un signal de mesure fonction de l'environnement dans lequel la sonde se trouve, duquel on peut extraire des informations quant à des anomalies dans l'échangeur thermique.

Une variation de l'induction magnétique, typiquement par une bobine dans laquelle circule un courant alternatif, engendre des courants de Foucault, dont la variation induite du champ magnétique est détectée. Typiquement, on mesure la différence de tension engendrée par la variation d'impédance de la bobine.

L'exploitation des signaux de mesure de cette sonde à courant de Foucault n'induit pas d'allongement de l'arrêt du générateur de vapeur, puisque cette sonde à courant de Foucault est déjà utilisée lors des arrêts de tranche, notamment pour inspecter l'intégrité des tubes du générateur de vapeur.

Cette sonde à courant de Foucault, initialement destinée à la détection d'endommagement des tubes, est également sensible au colmatage. De plus, l'interprétation de ce signal est actuellement réalisée manuellement par des opérateurs spécialisés, ce qui est très long, de l'ordre d'une semaine de traitement environ pour l'analyse d'un seul générateur de vapeur. De plus, l'intervention d'un opérateur pour relever des mesures à partir d'un logiciel d'analyse donne souvent lieu à un biais difficile à quantifier.

En outre, le signal de mesure n'est pas calibré et est bruité, de sorte que son exploitation peut se révéler difficile.

L'évaluation de l'aspect colmaté d'un passage folié par un opérateur à partir du signal de mesure est en outre très peu fiable, étant généralement effectuée empiriquement au vu du signal reçu et de sa comparaison avec d'autres signaux correspondant à d'autres passages dont l'état est connu, par exemple par inspection télévisuelle.

PRESENTATION DE L'INVENTION

Un but général de l'invention est de pallier tout ou partie des défauts des méthodes d'évaluation du colmatage des passages foliés autour des tubes dans les plaques entretoises de l'état de la technique.

Il est notamment proposé un procédé d'évaluation du colmatage de passages d'une plaque entretoise d'un échangeur thermique à tubes, lesdits passages étant ménagés le long des tubes pour la traversée de la plaque entretoise par un fluide, dans lequel on fait circuler dans un tube dudit échangeur une sonde à courant de Foucault et on mesure avec celle-ci un signal de mesure fonction de l'environnement dans lequel la sonde se trouve, et où pour évaluer le colmatage au niveau du bord aval d'une plaque entretoise:

- on détermine à partir du signal de mesure un signal de bord inférieur correspondant au passage du bord aval de la plaque entretoise par la sonde,
- on détermine à partir du signal de mesure un signal de bord supérieur correspondant au passage du bord amont de la plaque entretoise par la sonde,
- on détermine une estimation de la réponse impulsionnelle de la sonde correspondant au passage de la plaque entretoise par la sonde dans le tube et étant représentative de la réponse de la sonde à courants de Foucault à une variation d'impédance;
- on met en oeuvre une déconvolution du signal de bord inférieur au moyen de ladite estimation de la réponse impulsionnelle correspondant au passage de la plaque entretoise par la sonde dans le tube et étant représentative de la réponse de la sonde à courants de Foucault à une variation d'impédance;
- on évalue le colmatage du passage au niveau du bord aval d'une plaque entretoise en analysant le signal de bord inférieur ainsi déconvolué au moyen de l'estimation de la réponse impulsionnelle.

Ce procédé est avantageusement complété par les caractéristiques suivantes, prises seules ou en une quelconque de leur combinaison techniquement possible :

- la sonde acquiert au moins en partie le signal de mesure en mode différentiel;
- le signal de mesure est un signal multifréquence composé d'au moins deux signaux à des fréquences différentes, et le signal de bord inférieur et le signal de bord supérieur résultent de combinaisons linéaires d'au moins deux signaux à des fréquences différentes dudit signal de mesure;
- la combinaison linéaire fait intervenir un coefficient complexe optimisé pour minimiser la puissance de signal le long du tube hors des zones présence de plaque;
- la réponse impulsionnelle de la sonde est estimée à partir du signal de bord supérieur;
- la déconvolution du signal de bord inférieur au moyen de l'estimation de la réponse impulsionnelle de la sonde est réalisée en utilisant un filtre construit à partir de ladite estimation de réponse impulsionnelle ;
- la réponse en fréquence du filtre est une approximation de l'inverse de la transformée de Fourier de la réponse impulsionnelle de la sonde;
- le filtre est un filtre de Wiener et la déconvolution est une déconvolution de Wiener;
- la réponse en fréquence du filtre de Wiener est de la forme:

$$G[f] = \frac{H^*[f]}{\|H[f]\|^2 + \frac{B[f]}{S[f]}}$$

avec l'exposant * désignant la conjugaison complexe, H[f] la transformée de Fourier de la réponse impulsionnelle de la sonde, S[f] la densité spectrale de puissance du signal à estimer et B[f] la densité spectrale de puissance du bruit;
- la réponse impulsionnelle de la sonde h[n] est estimée à partir de la réponse de la sonde $z_{sup}[n]$ au passage du bord amont de la plaque entretoise par la sonde selon :

$$h[n] = -z_{\text{sup}}[-n]$$

- un filtrage par un filtre passe-bas est appliqué au signal de bord inférieur déconvolué, la fréquence de coupure dudit filtre passe-bas étant déterminée au moyen d'un écart-type d'une fonction gaussienne constituant une approximation de la partie réelle d'une impulsion du signal correspondant au passage d'un bord de plaque entretoise propre par la sonde;
- l'analyse du signal de bord inférieur déconvolué comprend l'analyse de la partie réelle et de la partie imaginaire dudit signal de bord inférieur déconvolué;
- l'analyse du signal de bord inférieur déconvolué comprend la définition d'indicateurs correspondant à des couples d'extremums de grandeurs physiques de la partie imaginaire du signal de bord inférieur.

L'invention concerne également un produit programme d'ordinateur comprenant des instructions de code de programme pour l'exécution des étapes du procédé selon l'invention, lorsque ledit programme est exécuté sur un ordinateur.

PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:

- la figure 1, déjà commentée, illustre schématiquement, en vue de dessus, un passage folié dans une plaque entretoise, dans lequel passe un tube, selon une configuration courante d'un générateur de vapeur ;
- la figure 2 est un schéma de principe illustrant l'étalonnage du signal de mesure;

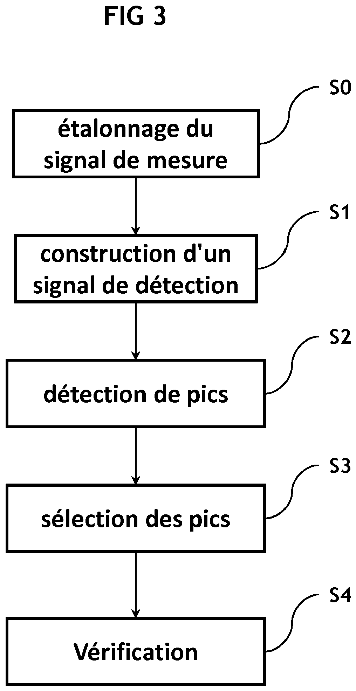

- la figure 3 est un schéma de principe de l'extraction des parties de signal correspondant au passage des plaques entretoises;

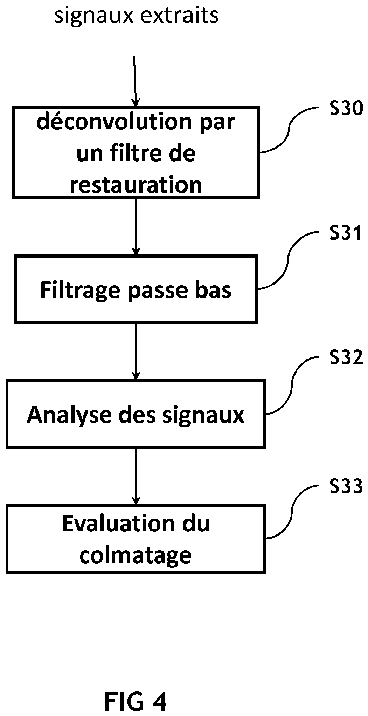

- la figure 4 est un schéma de principe du procédé d'évaluation du colmatage,
- la figure 5 illustre les changements d'impédance relevés par une sonde idéale dans une configuration de passage non colmaté (plaque dite propre);
- les figures 6 et 7 illustrent l'allure des signaux déconvolués dans la configuration de plaque propre;
- les figures 8 et 9 illustrent les changements d'impédance relevés par une sonde idéale dans une configuration de passage colmaté par un dépôt de magnétite situé au même niveau que le bord inférieur de la plaque entretoise;
- les figures 10 et 11 illustrent l'allure des signaux déconvolués dans la configuration de passage colmaté par un dépôt de magnétite situé au même niveau que le bord inférieur de la plaque entretoise;
- les figures 12 et 13 illustrent les changements d'impédance relevés par une sonde idéale dans une configuration dans laquelle une bague de dépôt de magnétite est présente sur le tube à une altitude inférieure à l'altitude de la plaque entretoise;
- les figures 14 et 15 illustrent l'allure des signaux déconvolués dans la configuration dans laquelle une bague de dépôt de magnétite est présente sur le tube à une altitude inférieure à l'altitude que le bord inférieur de la plaque entretoise.
- les figures 16 et 17 illustrent les changements d'impédance relevés par une sonde idéale dans une configuration dans laquelle un tube encrassé par un dépôt de magnétite présente une rupture d'encrassement en dessous du bord inférieur de la plaque entretoise;
- les figures 18 et 19 illustrent l'allure des signaux déconvolués dans la configuration dans laquelle un tube encrassé par un dépôt de magnétite présente une rupture d'encrassement en dessous du bord inférieur de la plaque entretoise;

DESCRIPTION DETAILLEE

Extraction des parties utiles du signal de mesure

Afin de procéder à l'évaluation du colmatage des passages foliés 12a, 12b des plaques entretoises 10, le signal de mesure subit de préférence un prétraitement visant notamment à extraire de celui-ci les parties correspondant au passage par la sonde des plaques entretoises. L'extraction de ces parties utiles du signal de mesure peut être faite de différentes façons. La demande de brevet français n°1256584 présente une mode de réalisation préférentiel de détermination de la position des plaques entretoises, dont les principes sont rappelés ci-dessous.

On fait circuler dans un tube 11 dudit échangeur une sonde à courant de Foucault multifréquence et on mesure avec celle-ci un signal de mesure fonction de l'environnement dans lequel la sonde se trouve. Le signal de mesure est donc acquis par la sonde axiale à courant de Foucault lors de son déplacement dans le tube 11 du générateur de vapeur. Ce signal de mesure est multifréquence, et se présente sous forme complexe, avec des composantes réelles et imaginaires. Dans le cadre de cette description, nous considérerons un signal avec des composantes complexes selon trois fréquences issues de trois canaux d'acquisition, dont deux en mode différentiels notés $z_1[n]$ et $z_3[n]$ et un en mode absolu noté $z_A[n]$. Les fréquences sont par exemple comprises dans la plage 100-600 kHz.

La sonde effectuant un aller-retour dans le tube, on choisira de préférence les signaux correspondant à la phase de déplacement où la sonde est tirée par le mécanisme qui la déplace, typiquement lors de son retour. En effet, il en résulte une meilleure stabilité mécanique de la sonde, et par conséquent une vitesse plus régulière de celle-ci.

La sélection de la partie du signal de la sonde correspondant au retour de la sonde est fondée sur la détection d'une chute importante de la tension mesurée au moment où la sonde bascule pour parcourir le tube dans le sens du retour. La sélection d'un signal de mesure limité à un seul sens de la sonde permet également de limiter la quantité de données à sauvegarder et à traiter.

Compte tenu de la sensibilité des acquisitions des signaux des courants de Foucault aux conditions d'acquisition, au basculement de la sonde et afin de standardiser les signaux analysés, on met de préférence en oeuvre une étape préalable d'étalonnage.

Il s'agit d'étalonner les signaux par rapport à des signaux de référence, appelés signaux d'étalonnage. Ces derniers correspondent à des défauts implantés sur le tube d'étalonnage, et dont on connaît les caractéristiques (amplitude et phase). L'étalonnage (étape S0) s'effectue de la même manière quelle que soit la fréquence d'acquisition considérée, avec, en référence à la figure 2, pour chaque tube contrôlé :

- identification (étape S20) des parties du signal de mesure correspondant à des défauts connus du tube de l'échangeur thermique,
- estimation (étape S21) de la phase et de l'amplitude des parties du signal de mesure correspondant aux défauts connus,
- détermination (étape S22) d'une transformation à appliquer au signal de mesure à partir desdites parties du signal de mesure correspondant aux défauts connus pour étalonner le signal de mesure,
- application (étape S23) de la transformation au signal de mesure.

Soient $z_{bru}(f)=x+jy$ (où j est le nombre imaginaire) issu d'une acquisition à la fréquence f, et $z_{etal}(f)=x_{etal}+jy_{etal}$ l'impédance complexe mesurée pour un défaut d'étalonnage donné à la même fréquence.

Un défaut d'étalonnage est caractérisé par deux paramètres $A_0$ et $\theta_0$ qui sont respectivement l'amplitude et la phase du vecteur max-min (vecteur d'amplitude maximale sur la représentation selon Lissajous). Ce sont les caractéristiques que le défaut d'étalonnage doit présenter après étalonnage.

Avant étalonnage, ces deux paramètres valent respectivement A et $\theta$. L'étalonnage du signal z consiste alors en une rotation d'angle $\delta\phi=\theta_0-\theta$ et une homothétie de paramètre $h=A_0/A$ tel que décrit par l'équation suivante :

$$z = h\, z_0\, e^{j\delta\phi}$$

De fait, il n'est pas fait appel à la configuration géométrique du tube ou de l'échangeur thermique pour détecter la zone du défaut, mais uniquement aux caractéristiques du signal (phase et amplitude). On dispose ainsi d'un étalonnage indépendant des problèmes de manipulation de la sonde ou d'échantillonnage du signal, susceptible de fausser l'appréciation de la position de la partie du signal correspondant au défaut.

Une fois le signal de mesure étalonné, il reste à déterminer les parties du signal de mesure multifréquence correspondant au passage au niveau des plaques entretoises 10 de la sonde détectrice de courants de Foucault acquérant ledit signal de mesure dans le tube de l'échangeur thermique.

Le signal de mesure est très bruité et ne peut être utilisé directement pour détecter les plaques entretoises 10. Afin de faciliter cette détection, un signal de détection, noté d[n], est construit par combinaison linéaire de composantes du signal de mesure de fréquences différentes pour minimiser l'énergie du signal de détection entre les plaques entretoises 10, tout en prenant une valeur importante au passage des plaques entretoises 10.

Les signaux disponibles en entrée de l'algorithme sont les trois signaux complexes étalonnés $z_A[n]$, $z_1[n]$ et $z_3[n]$ correspondant au retour de la sonde dans le tube. Seuls les signaux correspondant au mode différentiel (z1 et z3), plus sensibles aux passages de la sonde par une plaque, sont utilisés dans cette partie. On notera $x_i[n]$ et $y_i[n]$ les composantes respectivement réelles et imaginaires du signal $z_i[n]$.

Dans un premier temps l'ensemble des mesures disponibles est filtré par un filtre passe haut pour supprimer les faibles variations des signaux dues au mouvement horizontal de la sonde dans le tube. Pour chaque signal disponible on applique un filtre passe-haut (par exemple un filtre de Butterworth), par exemple de fréquence réduite de coupure 0.01. Les signaux résultant du filtrage des signaux $z_1$ et $z_3$ sont notés $z_{1f}$ et $z_{3f}$. Les parties réelles et imaginaires de ces signaux sont donc notées :

$$z_{1f}[n]= x_{1f}[n]+j\, y_{1f}[n]$$

$$z_{3f}[n]= x_{3f}[n]+j\, y_{3f}[n]$$

Cette première opération de filtrage permet de construire des signaux présentant une ligne de base de moyenne constante et nulle. Pour ensuite construire un signal de détection qui soit le plus faible possible entre les plaques, on commence par rechercher une fenêtre d'observation exprimée en nombre d'échantillons de signal qui limite l'impact du passage d'une plaque entretoise 10.

Pour ce faire, on dispose d'information sur la vitesse moyenne $v$ de la sonde, ainsi que sur la fréquence d'échantillonnage $f_e$. Connaissant la vitesse de la sonde et sa fréquence d'échantillonnage, chaque distance peut être convertie en un nombre d'échantillons de signal selon la formule :

$$N_{echantillons} = \frac{distance \times f_e}{v}$$

On peut par exemple chercher une fenêtre d'observation correspondant à une longueur de M échantillons inférieure au nombre d'échantillons entre deux plaques entretoises 10 successives $N_{pe,pe}$, par exemple

$$M = \frac{N_{pe,pe}}{2}.$$

Cette recherche s'effectue par exemple sur le signal $x_{3f}$. $x_{3f}$ présentant une forte variance lors du passage de la sonde au niveau d'une plaque entretoise 10. Il suffit pour trouver une telle fenêtre de rechercher la portion du signal de longueur $M$ où la variance de $x_{3f}$ est minimale. En notant $m_0$ le premier indice de cette fenêtre on a :

$$m_0 = \underset{m}{\operatorname{argmin}} \left\{ \sum_{n=m}^{m+M-1} \left( x_{3f}[n] - \frac{1}{M} \sum_{n=m}^{m+M-1} x_{3f}[n] \right)^2 \right\}$$

Cependant, les portions de signal correspondant au passage par les plaques entretoises 10 ne sont pas connues, puisque c'est justement ce que l'on cherche à déterminer. Ainsi, s'il devait se trouver une plaque entretoise 10 dans la fenêtre d'observation, cela pourrait grandement impacter la suite du procédé.

Afin de limiter l'impact du passage d'une plaque entretoise 10 dans le calcul, une fenêtre suffisamment grande est de préférence choisie. Par exemple, la fenêtre d'observation peut correspondre à un nombre d'échantillons estimé du signal de mesure représentant la distance entre des plaques entretoises 10 consécutives le long du tube 11, c'est-à-dire de taille $M=N_{pe,pe}$.

Pour limiter l'impact du passage par une plaque entretoise 10, on peut également choisir l'ensemble des indices du signal n tels que $|x_{3f}[n]|$ est inférieur à un certain seuil. Ce seuil peut être par exemple l'écart-type du signal $x_{3f}$.

On combine alors différentes composantes du signal de mesure pour déterminer un signal de détection, la combinaison ainsi effectuée étant choisie pour minimiser l'énergie du signal de détection. La combinaison des différentes composantes du signal de mesure est une combinaison linéaire adaptative, les valeurs des coefficients de pondération utilisés pour cette combinaison étant déterminés, pour un échantillon du signal de détection, par minimisation de la variance du signal de détection sur la fenêtre d'observation du signal de mesure autour de cet échantillon.

De préférence, les différentes composantes du signal de mesure combinées pour déterminer le signal de détection sont des composantes réelles et imaginaires du signal de mesure. De même, différentes composantes du signal de mesure combinées pour déterminer le signal de détection sont des composantes de fréquences différentes.

On cherche ainsi des coefficients de pondération $\alpha$, $\beta$ et $\gamma$ tel que

$$x_{3f}[n] \approx \alpha.x_{1f}[n] + \beta.y_{3f}[n] + \gamma.y_{1f}[n]$$

afin de construire le signal de détection d[n] défini par

$$d[n] = x_{3f}[n] - \alpha.x_{1f}[n] - \beta.y_{3f}[n] - \gamma.y_{1f}[n]$$

De plus, pour gérer la forte non-stationnarité des composantes du signal de mesure, les coefficients $\alpha$, $\beta$ et $\gamma$ sont mis à jour pour chaque échantillon de signal. Plus précisément le triplet $\{\alpha[n], \beta[n], \gamma[n]\}$ choisi à un instant n est celui qui minimise la puissance de l'erreur de reconstruction sur une fenêtre de signal centrée sur le n-ème échantillon :

$$\{\propto [n], \beta[n], \gamma[n]\} = \underset{\alpha,\beta,\gamma}{\operatorname{argmin}} \left\{ \sum_{k=n-M/2}^{k=n+M/2-1} \left( x_{3f}[k] - \propto x_{1f}[k] - \beta y_{3f}[k] - \gamma y_{1f}[k] \right)^2 \right\}$$

L'optimisation de $\{\alpha[n], \beta[n], \gamma[n]\}$ s'effectue à l'aide de l'algorithme des moindres carrés. On notera que l'on peut changer le nombre de coefficients.

On obtient ainsi un signal de détection d[n] choisi par combinaison linéaire adaptative de composantes réelles et imaginaires du signal de mesure.

Une telle construction du signal de détection présente plusieurs avantages :

- une estimation automatique du coefficient optimal de combinaison des fréquences (i.e. recherche du coefficient minimisant l'énergie du signal hors plaque) ;
- la combinaison peut se faire entre toutes les composantes (parties réelles et imaginaires) des différentes fréquences ;
- les coefficients de combinaison ne sont pas constants le long du tube, mais varient afin de s'adapter au tube. On gère ainsi les variations de l'état du tube.

Une fois le signal de détection construit, il reste à détecter des pics du signal de détection susceptibles de correspondre au passage de plaques entretoises 10, par comparaison avec un seuil de détection. En effet, le signal de détection ainsi créé contient différent pics, qui correspondent au passage de la sonde par les différentes plaques, et pas seulement les plaques entretoises 10, et d'autres éléments de structures.

Ces pics de signal peuvent être identifiés en ne gardant que les pics de signal supérieurs à un seuil de détection s.

De préférence, le seuil de détection pour détecter les pics du signal de détection est fonction de la valeur minimale que prend l'écart-type $\sigma$ du signal de détection sur une partie du signal correspondant à un nombre d'échantillons inférieur au nombre d'échantillons estimé entre deux plaques entretoises 10 consécutives.

L'écart-type $\sigma$ peut être déterminé de la façon suivante :

$$\sigma = \min_{m} \left\{ \sqrt{\frac{1}{M-1} \sum_{n=m}^{m+M-1} \left( d[n] - \frac{1}{M} \sum_{n=m}^{m+M-1} d[n] \right)^2} \right\}$$

Le seuil de détection doit alors être un compromis entre le risque de fausse détections (un seuil trop faible entraîne la détection de nombreux pics ne correspondant pas au passage d'une plaque entretoise 10par la sonde) et le risque de ne pas détecter une plaque entretoise 10. Il peut par exemple être compris entre 5 et 15 $\sigma$, de préférence 10 $\sigma$.

Il se peut que le passage de la sonde par une plaque entretoise se traduise par plusieurs passages du signal au-dessus du seuil de détection. Pour ne garder qu'un seul pic par plaque, pour ensuite repérer les pics correspondant aux plaques entretoises 10, le test suivant est effectué sur les couples de pics successifs: si $n1$ et $n2$ sont deux indices de pics successifs, on dira que $n2$ est un « pic secondaire » de $n1$ si d[n1]>d[n2] et si le nombre d'échantillons entre $n1$ et $n2$ est fortement inférieur à la distance minimale estimée entre deux pics de plaques.

Ainsi, préalablement à l'étape de sélection des pics, on restreint les pics détectés aux pics correspondant à un maximum local du signal de détection sur une plage du signal de détection correspondant à un nombre d'échantillons de part et d'autre du maximum local inférieur ou égal au minimum des trois valeurs suivantes :

- 0,5 fois un nombre d'échantillons estimé entre deux plaques entretoises
- 0,8 fois un nombre d'échantillons estimé entre la plaque entretoise de la branche chaude la plus proche de la branche froide dudit échangeur thermique et la plaque entretoise de la branche froide la plus proche de la branche chaude dudit échangeur thermique,
- 0,8 fois un nombre d'échantillons estimé entre une première des plaques entretoises et une autre plaque précédente dans le sens de circulation de la sonde.

Les pics secondaires étant supprimés, il reste alors à sélectionner des pics du signal de détection correspondant au passage des plaques entretoises 10 par une détermination des pics du signal présentant un espacement régulier.

Idéalement, si la sonde a une vitesse connue et constante v, alors le nombre d'échantillons entre deux plaques est exactement proportionnel à la distance entre plaque:

$$N_{pe,pe} = \frac{distance\ entre\ plaques \times f_e}{v}$$

Dans ce cas idéal, il suffirait pour identifier les indices des échantillons correspondant de ne garder que les pics dont les indices sont exactement espacés de $N_{pe,pe}$. En pratique, la vitesse de la sonde n'est pas exactement constante ni précisément connue et peut varier le long du tube. L'écart entre deux pics correspondant à des plaques entretoises 10 n'est donc pas exactement égal à $N_{pe,pe}$ et il peut être différent d'un couple de plaques entretoises 10 à un autre. Cet écart moyen entre plaques entretoises 10 peut cependant être estimé.

Pour ce faire, on sélectionne les pics du signal de détection correspondant au passage des plaques entretoises 10 par la sélection d'au moins un sous-ensemble de pics minimisant la différence entre le nombre d'échantillons du signal de détection entre deux pics successifs dudit sous-ensemble et une valeur médiane du nombre d'échantillons du signal de détection entre deux pics successifs.

Un tube d'un échangeur thermique s'étend le long de celui-ci à travers deux parties, généralement nommées branche froide et branche chaude, en fonction du sens d'écoulement des fluides réalisant l'échange thermique, séparées par une structure sans plaque entretoise 10 désignée comme le cintre. Par conséquent, une telle structure rompt la régularité de l'espacement des plaques entretoises. Il suffit d'appeler le procédé suivant pour une branche, puis pour l'autre, pour sélectionner l'ensemble des pics correspondant aux plaques entretoises 10.

On appelle $i_k$ l'indice du k-ème pic détecté, $\Delta[k]=i_{k+1}-i_k$ l'écart entre les pic successifs k et k+1, et $N_{pe,pe,réel}$ le nombre d'échantillons moyen entre deux plaques entretoises 10. Les plaques entretoises étant les plaques majoritaires le long du tube, la majorité des valeurs prises par $\Delta[k]$ est située autour de $N_{pe,pe,réel}$. Une estimation de $N_{pe,pe,réel}$ est donc fournie par la valeur médiane de l'ensemble des valeurs prises par $\Delta[k]$ :

$$N_{pe,pe,réel} = mediane\{\Delta[k]\}$$

Il reste alors à trouver, parmi l'ensemble I des indices de pics, le sous-ensemble $I_{pic}$ d'indices correspondant aux nombre de plaques entretoises NbPe, tels que les écarts entre deux indices successifs soient toujours à peu près égale à $N_{pe,pe,réel}$ :

$$I_{pic} = \underset{I}{\mathrm{argmin}} \sum_{i \in I} \left( \Delta[i] - N_{pe,pe,réel} \right)^2.$$

On obtient alors les indices des échantillons du signal correspondant au passage des plaques entretoises 10.

Une fois estimé l'ensemble d'indices correspondant au passage de la sonde par les plaques entretoises 10, on peut ensuite procéder à une étape subséquente de vérification dans laquelle les positions des pics du signal de détection correspondant au passage des plaques entretoises 10 sont comparées avec des données connues sur la géométrie de l'échangeur thermique. Deux critères sont utilisés : la longueur des plaques entretoises 10 et la longueur du cintre.

Le premier critère de vérification concerne la longueur du cintre : pour chaque tube, le nombre d'échantillon entre la dernière plaque de la branche chaude et la dernière plaque de la branche froide est comparé à la distance connue selon les plans. Une marge est autorisée, pour tenir compte de l'incertitude sur la vitesse de la sonde.

Le deuxième critère de validation permet de vérifier la longueur de l'ensemble des plaques détectées. L'algorithme de détection ayant permis d'estimer les indices des plaques entretoises 10 utilise les pics positifs du signal de détection. Cependant le passage de la sonde par une plaque entretoise 10 génère sur le signal au moins un pic positif et un pic négatif (les deux pics correspondent aux passages de la sonde par les bords de plaques).

Une nouvelle estimation des indices des plaques entretoises 10 peut donc être obtenue en détectant cette fois les pics négatifs du signal de détection, sans prendre en compte les premiers pics détectés. En pratique, il suffit de rappeler l'algorithme de détection des pics en prenant l'opposé du signal de détection (d[n] devient -d[n]). Le procédé peut ainsi comprendre une étape finale de vérification dans laquelle on prend l'opposé du signal de détection, on applique les étapes de détection S2 et de sélection S3 des positions des pics du signal de détection correspondant au passage des plaques entretoises 10 et on vérifie que les écarts entre les positions des pics sur le signal de détection et sur son opposé correspondent à la distance bord à bord d'une plaque entretoise 10.

On dispose donc ensuite, pour chaque branche, de deux ensembles d'indices estimés. Si ces deux ensembles d'indices sont corrects, l'écart entre les deux estimations d'une même plaque entretoise 10 doit être de l'ordre de grandeur de la taille d'une plaque entretoise 10. En tenant compte des imprécisions sur la vitesse de la sonde et des effets de bords de plaques, une marge est autorisée pour valider l'estimation.

Les positions des plaques entretoises étant connues dans le signal de mesure, on peut donc extraire de celui-ci les parties utiles relatives aux passages des plaques entretoises par la sonde.

Evaluation du colmatage

Le signal utile relatif au passage des plaques entretoises 10 est donc disponible après son extraction de l'ensemble du signal de mesure émis par la sonde SAX. Pour ce faire, d'autres méthodes que celle présentée précédemment peuvent être envisagées. A ce stade, pour chaque plaque entretoise 10, on a donc extrait à partir du signal de mesure un signal correspondant au passage du bord aval de la plaque entretoise 10 par la sonde, et un signal correspondant au passage du bord amont de la plaque entretoise 10 par la sonde.

On procède alors à la détermination à partir du signal de mesure d'un signal de bord inférieur correspondant au passage du bord aval de la plaque entretoise 10 par la sonde, et d'un signal de bord supérieur correspondant au passage du bord amont de la plaque entretoise 10 par la sonde.

Ainsi, qu'expliqué plus haut, la sonde acquiert au moins en partie le signal de mesure en mode différentiel, et le signal de mesure est un signal multifréquence composé d'au moins deux signaux à des fréquences différentes.

De préférence, seuls les signaux correspondant au mode différentiel ($z_1$ et $z_3$) sont utilisés car plus sensibles au passage de la plaque entretoise 10. Ces signaux sont acquis à des fréquences différentes, et le signal de bord inférieur est déterminé en tant que combinaison linéaire d'au moins deux signaux à des fréquences différentes dudit signal de mesure, en l'occurrence $z_1$ et $z_3$.

Cette combinaison linéaire fait intervenir un coefficient complexe $\alpha$ optimisé pour minimiser la puissance de signal le long du tube 11 hors des zones de plaque entretoise 10.

Ainsi, le signal de bord inférieur $z_{inf}$ est déterminé à partir des signaux obtenus en mode différentiel sur les fréquences f3 et f1, de sorte que

$$z_{inf}[n] = z_{3inf}[n] - \alpha.z_{1inf}[n],$$

avec

$$\propto = argmin\|z_3[n] - \propto \times z_1[n]\|^2,$$

pour les indices n correspondant au signal hors des zones de plaque entretoise 10, et $z_{3inf}$ correspondant à la réponse de la sonde en mode différentiel sur la fréquence f3 lors du passage du bord aval, c'est-à-dire inférieur, de la plaque entretoise 10 par la sonde, et $z_{1inf}$ correspondant à la réponse de la sonde en mode différentiel sur la fréquence f1 lors du passage du bord aval, c'est-à-dire inférieur, de la plaque entretoise 10 par la sonde.

On procède de même avec le signal de bord supérieur, avec de préférence le même coefficient a, de sorte que $z_{sup}[n] = z_{3sup}[n] - \alpha.z_{1sup}[n]$, avec $z_{3sup}$ correspondant à la réponse de la sonde en mode différentiel sur la fréquence f3 lors du passage du bord amont, c'est-à-dire supérieur, de la plaque entretoise 10 par la sonde, et $z_{1sup}$ correspondant à la réponse de la sonde en mode différentiel sur la fréquence f1 lors du passage du bord amont, c'est-à-dire supérieur, de la plaque entretoise 10 par la sonde.

On obtient ainsi deux signaux complexes. Le signal de bord inférieur $z_{inf}$ s'écrit :

$$z_{inf}[n] = x_{inf}[n] + i.y_{inf}[n]$$

avec $x_{inf}$ et $y_{inf}$ les composantes respectivement réelle et imaginaire du signal de bord inférieur et i l'unité imaginaire telle que $i^2 = 1$. De même le signal de bord supérieur $z_{sup}$ s'écrit :

$$z_{sup}[n] = x_{sup}[n] + i.y_{sup}[n]$$

avec $x_{sup}$ et $y_{sup}$ les composantes respectivement réelle et imaginaire du signal de bord supérieur et i l'unité imaginaire telle que $i^2 = 1$.

Il reste donc à mettre en oeuvre un traitement adéquat de ces signaux afin d'évaluer le colmatage du passage de la plaque entretoise 10. Ce traitement est mis en oeuvre sur le signal de bord inférieur, qui est un signal complexe. En effet, le colmatage des passages foliés, c'est-à-dire les lobes 12a, 12b, dans les plaques entretoises 10 intervient au niveau du bord inférieur des plaques entretoises 10, en amont du passage pour le flux de fluide traversant la plaque entretoise 10. C'est donc à partir du signal de bord inférieur que peut être estimé le taux de colmatage.

Plus précisément, le signal de bord inférieur est déconvolué par la réponse impulsionnelle complexe de la sonde.

De fait, dans un cas idéal d'une sonde SAX parfaite le signal ne devrait contenir qu'une suite d'impulsions complexes, correspondant au passage par un bord de plaque entretoise 10, à la rencontre d'un dépôt, et l'étude du seul signal de bord inférieur devrait suffire à quantifier le colmatage.

Cependant, en pratique, la réponse de la sonde SAX à une variation d'impédance n'est pas parfaite. On l'appelle la réponse impulsionnelle de la sonde. Il est donc nécessaire de restaurer le signal de bord inférieur pour retrouver la réponse de la sonde représentative de l'état de colmatage du passage folié dans la plaque entretoise 10. On détermine à cet effet une estimation de la réponse impulsionnelle de la sonde, de préférence correspondant au passage d'un bord propre de la plaque entretoise 10 par la sonde dans le tube 11, par exemple à partir du signal de bord supérieur. On cherche alors à déconvoluer le signal de bord inférieur $z_{inf}[n]$ par un signal $h[n]$ correspondant à la réponse impulsionnelle de la sonde au passage de la plaque entretoise.

Pour ce faire, on peut utiliser un filtre. Un tel filtre est appelé filtre de déconvolution ou encore filtre de restauration. Le filtre de déconvolution est calculé à partir de l'estimation de la réponse impulsionnelle, et on met en oeuvre une déconvolution du signal de bord inférieur au moyen dudit filtre de déconvolution (étape S30). Le filtre de déconvolution peut être une approximation de l'inverse de la réponse impulsionnelle de la sonde. Il peut être aussi un filtre de Wiener et la déconvolution ainsi être une déconvolution de Wiener, ce qui constitue un mode de réalisation préférentiel du procédé décrit. D'autres méthodes de déconvolution existent et peuvent être utilisées.

Par exemple, on peut chercher le signal de bord inférieur déconvolué $z_{inf,id}[n]$ qui correspond le mieux au signal de bord inférieur $z_{inf}[n]$ qui a été observé :

$$z_{inf,id}[n] = argmin_{z[n]}\{J_1(z_{inf}[n] - z[n] \otimes h[n]) + \lambda \times J_2(z[n])\}$$

avec $J_1$ le critère d'adéquation aux données (par exemple une norme $L_2$, une norme $L_2$ au carré, une norme $L_1$, ...) et $J_2$ un critère traduisant une caractéristique a priori connue sur le signal que l'on cherche à reconstruire (par exemple une norme $L_2$, une norme $L_2$ au carré, une norme $L_1$, une fonction des écarts entre échantillons voisins $z[n]-z[n-1]$). Le terme $\lambda$ permet d'accorder plus ou moins d'importance à l'a priori sur la solution ($J_2$) par rapport à l'adéquation aux données ($J_1$). Ce critère peut également s'écrire dans le domaine fréquentiel.

Il y a donc plusieurs variantes de critères de déconvolution J1 et J2 qui peuvent être utilisées, et, pour chaque variante, plusieurs méthodes de résolutions, par exemple par filtrage ou par des méthodes d'optimisation.

Dans le cas où le filtre de déconvolution est un filtre de Wiener, la réponse en fréquence du filtre de Wiener est de la forme:

$$G[f] = \frac{H^*[f]}{\|H[f]\|^2 + \frac{B[f]}{S[f]}}$$

avec l'exposant * désignant la conjugaison complexe, $H[f]$ la transformée de Fourier de la réponse impulsionnelle de la sonde, $S[f]$ la densité spectrale de puissance du signal à estimer et $B[f]$ la densité spectrale de puissance du bruit. Un bourrage de zéros ou *zero-padding,* c'est-à-dire un ajout de zéros au sein des signaux, peut être effectué lors du calcul des transformées de Fourier discrètes afin d'augmenter la résolution fréquentielle.

La réponse impulsionnelle $h[n]$ de la sonde peut être estimée à partir de la réponse de la sonde au passage du bord amont de la plaque entretoise 10 par la sonde, c'est-à-dire au moyen du signal de bord supérieur, selon la formule :

$$h[n] = -z_{sup}[-n].$$

Par exemple, à partir des traitements effectués pour extraire les parties utiles du signal de mesure, on connait les indices $i_{inf}$ et $i_{sup}$ du signal de mesure correspondant respectivement aux passages des bords inférieur et supérieur de la plaque entretoise 10. Pour une fréquence d'échantillonnage Fe= 1000 Hz, une vitesse de la sonde v=0,5 m.s$^{-1}$ et une longueur de plaque entretoise 10 de 30 mm, on a 60 échantillons de signal correspondant à la plaque entretoise 10, et une réponse impulsionnelle de 20 échantillons environ. On peut alors choisir pour la plage de valeurs du signal de bord supérieur $z_{sup}[n]$ les 60 échantillons suivant le centre de la plaque entretoise 10 déterminé à environ $0,5 \times (i_{inf} + i_{sup})$, soit une marge de 20 échantillons de chaque côté de la réponse impulsionnelle. Ces chiffres sont bien sûr indiqués en tant qu'exemple non limitatif de l'utilisation du signal de bord supérieur $z_{sup}[n]$ pour l'estimation de la réponse impulsionnelle de la sonde.

Plusieurs approches sont possibles pour estimer le rapport bruit sur signal correspondant au ratio de la densité spectrale de puissance du bruit B[f] et de la densité spectrale de puissance S[f] du signal à estimer. Une de ces approches consiste à approximer ce rapport par une constante. En effet, le signal à estimer correspond à un signal de bord inférieur idéal qui présenterait une suite d'impulsions correspondant aux variations d'impédance complexe rencontrées par la sonde au voisinage du bord inférieur de la plaque entretoise 10. Par conséquent, la densité spectrale de puissance S[f] de ce signal peut être considérée comme une constante. La densité spectrale de puissance du bruit B[f] peut être déterminée sur les portions du signal entre les plaques entretoises 10. Celui-ci peut être assimilé à un bruit blanc, et donc cette densité spectrale de puissance du bruit B[f] peut être considérée comme une constante. Ainsi le rapport des densités spectrales de puissance du bruit et du signal à estimer peut être considéré comme une constante. Cette constante peut être réglée empiriquement, en prenant par exemple :

$$\frac{B[f]}{S[f]} = 10 \times \sigma^2,$$

avec $\sigma^2$ la puissance du bruit, calculée sur une zone hors plaques.

Une fois le filtre de déconvolution déterminé, on peut alors procéder à la déconvolution du signal de bord inférieur au moyen dudit filtre de déconvolution. On applique alors le filtre de déconvolution g au signal de bord inférieur $z_{inf}$ pour obtenir un signal de bord inférieur déconvolué complexe $z_{inf\,id}$ introduit par la réponse impulsionnelle de la sonde :

$$z_{inf\,id} = z_{inf} * g\,.$$

En pratique, cette opération peut être réalisée dans le domaine fréquentiel :

$$z_{inf\,id} = \mathrm{TF}^{-1}\{Z_{inf}[f] \times G[f]\}\,,$$

avec $Z_{inf}[f]$ la transformée de Fourier du signal de bord inférieur $z_{inf}$, G[f] la transformée de Fourier du filtre de déconvolution g, et $\mathrm{TF}^{-1}$ indiquant la transformation de Fourier inverse.

Afin d'éviter d'amplifier trop sensiblement certaines fréquences ne correspondant qu'à du bruit de mesure, un filtrage (étape S31) par un filtre passe-bas est appliqué au signal de bord inférieur déconvolué, la fréquence de coupure dudit filtre passe-bas étant déterminée au moyen d'un écart-type d'une fonction gaussienne constituant une approximation de la partie réelle d'une impulsion du signal de bord inférieur correspondant au passage de bord de plaque entretoise 10.

En effet, la partie réelle ou imaginaire d'une impulsion du signal de bord inférieur correspondant au passage de bord de plaque entretoise 10 présente des formes très proches de fonctions gaussiennes ou de leurs dérivées. Par exemple, on peut assimiler à une fonction gaussienne l'impulsion 0 dans la partie réelle du signal de bord inférieur correspondant au passage du bord inférieur de la plaque entretoise 10 dans une configuration sans colmatage, et à une combinaison linéaire de dérivées de la fonction gaussienne les impulsions dans la partie imaginaire du signal de bord inférieur correspondant au passage du bord inférieur de la plaque entretoise 10 dans une configuration colmatée.

Si $\sigma$ est l'écart-type de cette fonction gaussienne, généralement de l'ordre de 3 ou 4 échantillons, les transformées de Fourier des signaux à déconvoluer ne contiennent plus d'énergie au-delà d'une fréquence maximale $f_{max}$:

$$f_{max} = \frac{3}{2\pi\sigma}.$$

On peut donc choisir cette fréquence maximale $f_{max}$ en tant que fréquence de coupure du filtre passe-bas.

Une fois le signal de bord inférieur déconvolué ainsi filtré, il reste à analyser celui-ci pour évaluer le colmatage. Cette analyse se base de préférence sur l'analyse de l'allure de la partie réelle et de la partie imaginaire du signal de bord inférieur. Ces allures sont comparées aux allures idéales attendues pour plusieurs configurations afin d'identifier la configuration à laquelle correspond le signal de bord inférieur déconvolué. Plusieurs exemples sont donnés ci-après, pour le cas d'une sonde entrant par le bord inférieur de la plaque. Les mêmes configurations seraient obtenues dans le cas d'une sonde sortant par le bord inférieur de la plaque.

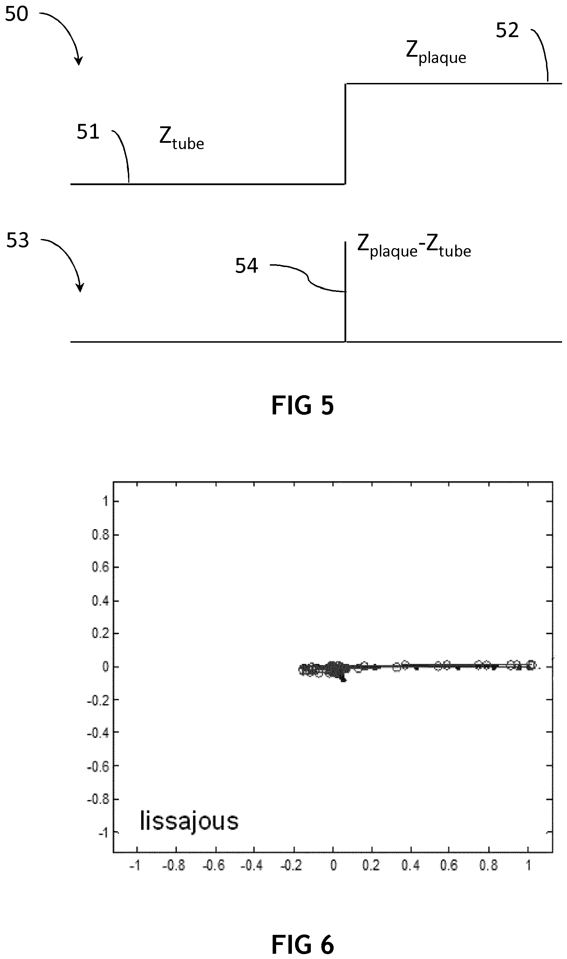

La réponse temporelle idéale de la sonde traversant un bord de plaque entretoise 10 propre, c'est-à-dire exempt de colmatage ou d'encrassement, est illustré par la figure 5. Sur cette figure, la courbe 50 représente l'impédance complexe en mode absolu lors du passage d'un bord d'une plaque entretoise 10 propre. Celle-ci comprend une première partie 51 correspondant à une impédance caractéristique du tube 11 en l'absence de plaque entretoise 10, notée $Z_{tube}$, et une seconde partie 52 correspondant à une impédance caractéristique de la présence de la plaque $Z_{plaque}$.

La courbe 53 représente l'impédance complexe en mode différentiel lors du passage d'un bord d'une plaque entretoise 10 propre, en correspondance avec la courbe 50. Le passage du rebord de plaque entretoise 10 se traduit par une impulsion 54 caractéristique du passage de l'impédance du tube 11 à celle de la plaque entretoise 10, et correspondant à $Z_{plaque}$-$Z_{tube}$.

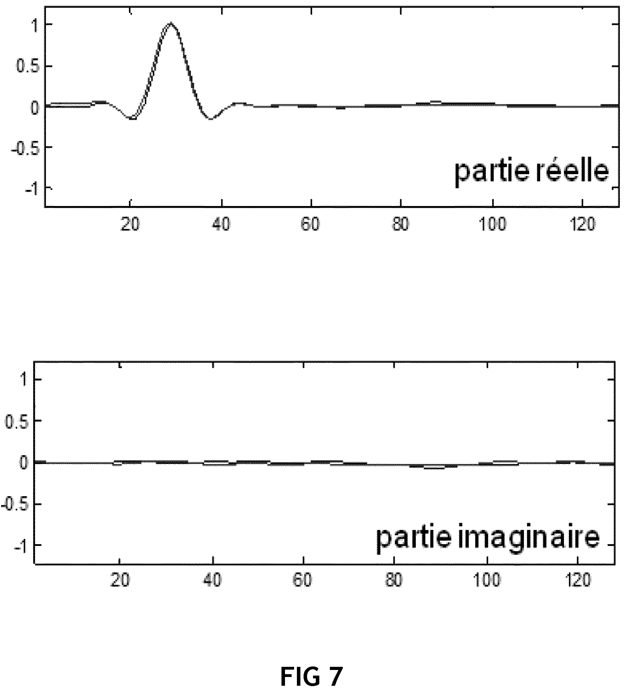

La figure 6 montre le signal Lissajous, avec la partie réelle du signal de bord inférieur déconvolué en abscisse et la partie imaginaire en ordonnée. La figure 7 montre de façon temporelle, en haut la partie réelle du signal de bord inférieur déconvolué, et en bas la partie imaginaire du signal de bord inférieur déconvolué. Le signal de bord supérieur déconvolué est également représenté, celui-ci étant considéré en tant que référence représentant un bord de plaque entretoise 10 propre. Cependant, dans ces figures, le signal de bord inférieur et le signal de bord supérieur sont superposés, indiquant que le bord de plaque inférieur, ou aval, est propre, au même titre que le bord de plaque supérieur.

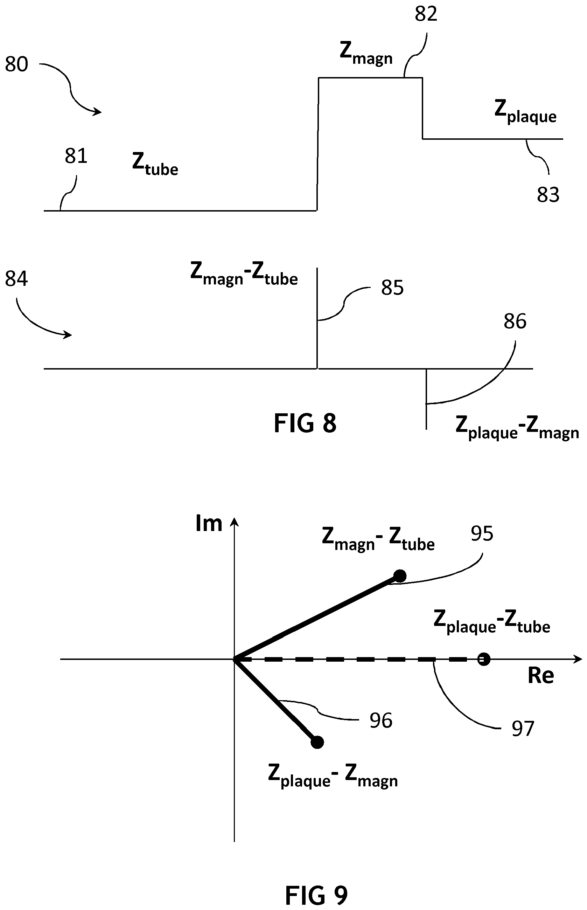

Les figures 8 à 11 illustrent une configuration dans laquelle le bord inférieur de plaque est colmaté par un dépôt de magnétite situé au même niveau que le bord inférieur de plaque.

La réponse temporelle idéale de la sonde traversant un bord de plaque entretoise 10 colmaté, est illustrée par la figure 8. Sur cette figure, la courbe 80 représente l'impédance complexe en mode absolu lors du passage d'un bord d'une plaque entretoise 10 colmatée. Celle-ci comprend une première partie 81 correspondant à une impédance caractéristique du tube 11 en l'absence de plaque entretoise 10 et de colmatage, notée $Z_{tube}$, une deuxième partie 82 correspondant à une impédance caractéristique de la présence d'un colmatage de magnétite entre le tube 11 et la plaque entretoise 10, notée $Z_{magn}$, et une troisième partie 83 correspondant à une impédance caractéristique de la présence de la plaque entretoise 10 sans magnétite, notée $Z_{plaque}$.

La courbe 84 représente l'impédance complexe en mode différentiel lors du passage d'un bord d'une plaque entretoise 10 colmatée, en correspondance avec la courbe 80. Le commencement du colmatage de magnétite se traduit par une première impulsion 85 caractéristique du passage de l'impédance du tube à celle du dépôt de magnétite, et correspondant à $Z_{magn}$-$Z_{tube}$. La fin du dépôt de magnétite se traduit par une seconde impulsion 86 caractéristique du passage de l'impédance du dépôt de magnétite à celle de la plaque et correspondant à $Z_{plaque}$-$Z_{magn}$.

La figure 9 montre une représentation en Lissajous que devrait présenter un signal idéal représentatif du colmatage. On y retrouve une première signature 95 caractéristique du passage de l'impédance du tube à celle du dépôt de magnétite, et correspondant à $Z_{magn}$-$Z_{tube}$. On y retrouve également une seconde signature 96 caractéristique du passage de l'impédance du dépôt de magnétite à celle de la plaque et correspondant à $Z_{plaque}$-$Z_{magn}$.

La signature en pointillés 97 correspond à la signature du passage caractéristique du passage de l'impédance du tube à celle de la plaque entretoise en l'absence de colmatage, et correspondant à $Z_{plaque}$-$Z_{tube}$. On remarque d'ailleurs que la somme de la première signature 95 et de la seconde signature 96 correspond à la signature en pointillés 97. En effet, $Z_{magn}$-$Z_{tube}$+ $Z_{plaque}$-$Z_{magn}$ = $Z_{plaque}$-$Z_{tube}$.

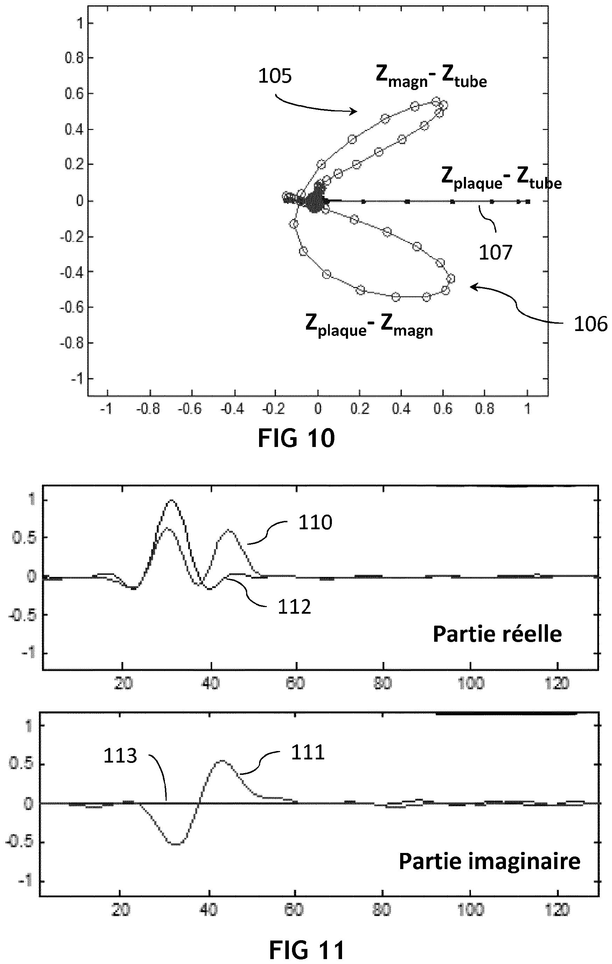

Les figures 10 et 11 illustrent le signal de bord inférieur déconvolué dans le cas du colmatage par un dépôt de magnétite. La figure 10 montre une représentation en Lissajous de ce signal de bord inférieur déconvolué. On y retrouve une première signature 105 caractéristique du passage de l'impédance du tube à celle du dépôt de magnétite, et correspondant à $Z_{magn}$-$Z_{tube}$. On y retrouve également une seconde signature 106 caractéristique du passage de l'impédance du dépôt de magnétite à celle de la plaque et correspondant à $Z_{plaque}$-$Z_{magn}$. La troisième signature 107 correspond à la signature du signal de bord supérieur déconvolué, supposé propre.

On constate une très bonne corrélation entre l'allure du signal de bord inférieur déconvolué et l'allure d'un signal idéal. Par conséquent, il est aisé de déduire à partir du signal de bord inférieur déconvolué l'état de colmatage du passage folié.

La figure 11 montre de façon temporelle, en haut la partie réelle du signal de bord inférieur déconvolué 110, et en bas la partie imaginaire du signal de bord inférieur déconvolué 111, dans la même configuration. La partie réelle 112 et la partie imaginaire 113 du signal de bord supérieur déconvolué sont également représentés, le signal de bord supérieur étant considéré en tant que référence représentant un bord de plaque propre.

On déduit des figures 10 et 11 que le signal de bord inférieur, après déconvolution, contient bien deux impulsions complexes, qui représentent les deux variations d'impédance correspondant au passage de la sonde par les extrémités du dépôt colmatant le passage folié.

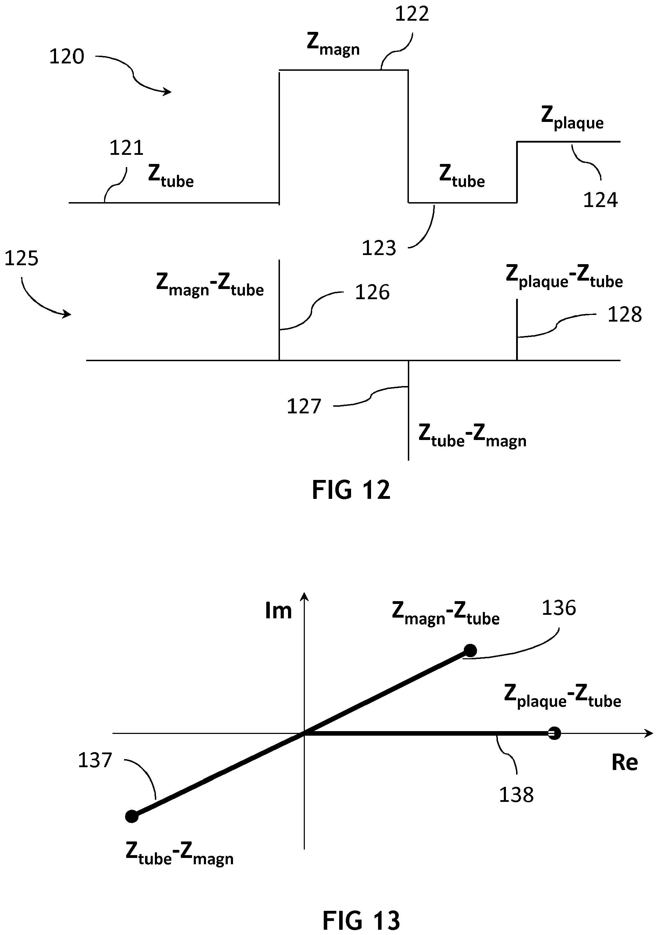

Les figures 12 à 15 illustrent une configuration dans laquelle un dépôt formé d'une bague de magnétite est présent sur le tube, en dessous du bord inférieur de la plaque entretoise.

La réponse temporelle idéale de la sonde au voisinage de cette bague de magnétite et de ce bord de plaque entretoise, est illustrée par la figure 12. Sur cette figure, la courbe 120 représente l'impédance complexe en mode absolu. Celle-ci comprend une première partie 121 correspondant à une impédance caractéristique du tube en l'absence de plaque entretoise et de colmatage, notée $Z_{tube}$, une deuxième partie 122 correspondant à une impédance caractéristique de la présence d'une bague de magnétite le long du tube, notée $Z_{magn}$, une troisième partie 123 correspondant à la partie du tube entre le dépôt et la plaque, et dont l'impédance est $Z_{tube}$, et enfin une quatrième partie 124 correspondant à une impédance caractéristique de la présence de la plaque entretoise 10 sans magnétite, notée $Z_{plaque}$.

La courbe 125 représente l'impédance complexe en mode différentiel lors du passage de la sonde au voisinage de cette bague de magnétite et de ce bord de plaque entretoise, en correspondance avec à la courbe 120. Le commencement du dépôt de magnétite se traduit par une première impulsion 126 caractéristique du passage de l'impédance du tube à celle du dépôt de magnétite, et correspondant à $Z_{magn}$-$Z_{tube}$. La fin du dépôt de magnétite se traduit par une deuxième impulsion 127 caractéristique du passage de l'impédance du dépôt de magnétite à celle du tube, et correspondant à $Z_{tube}$-$Z_{magn}$. Le rebord de la plaque entretoise se traduit par une troisième impulsion 128 caractéristique du passage de l'impédance du tube à celle de la plaque entretoise, et correspondant à $Z_{paque}$-$Z_{tube}$.

La figure 13 montre une représentation en Lissajous que devrait présenter un signal idéal représentatif de cette configuration. On y retrouve une première signature 136 caractéristique du passage de l'impédance du tube à celle de la bague de dépôt en magnétite, et correspondant à $Z_{magn}$-$Z_{tube}$. On y retrouve également une deuxième signature 137 caractéristique du passage de l'impédance du dépôt de magnétite à celle du tube, et correspondant à $Z_{tube}$-$Z_{magn}$. Il est à noter que logiquement, la deuxième signature 137 est l'opposée de la première signature 136. On y retrouve enfin une troisième signature 138 caractéristique du passage de l'impédance du tube à celle de la plaque, et correspondant à $Z_{plaque}$-$Z_{tube}$.

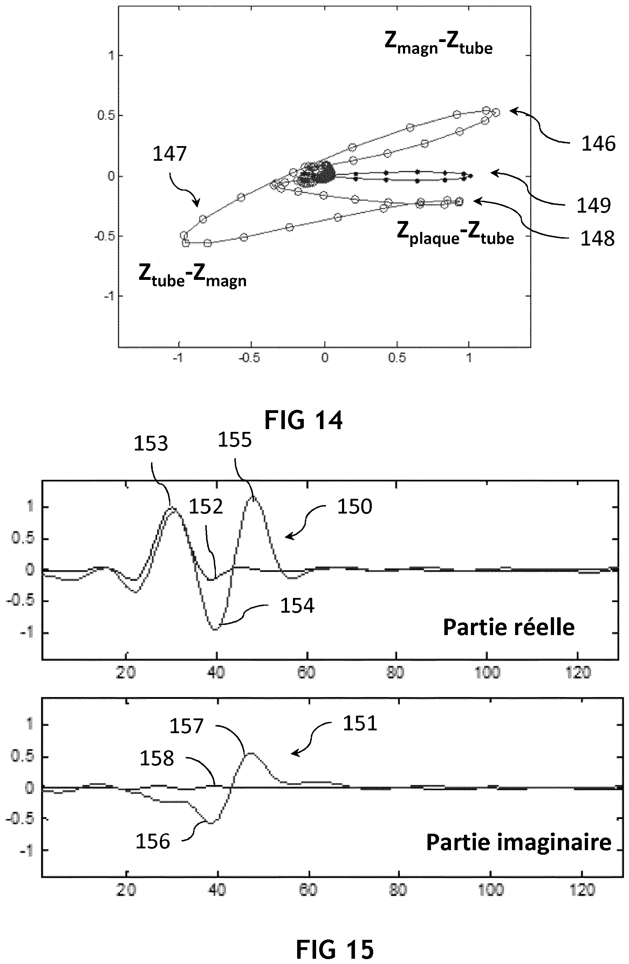

Les figures 14 et 15 illustrent le signal de bord inférieur déconvolué dans la configuration avec une bague de dépôt de magnétite. La figure 14 montre une représentation en Lissajous de ce signal de bord inférieur déconvolué. On y retrouve une première signature 146 caractéristique du passage de l'impédance du tube à celle de la bague de dépôt en magnétite, et correspondant à $Z_{magn}$-$Z_{tube}$. On y retrouve également une deuxième signature 147 caractéristique du passage de l'impédance du dépôt de magnétite à celle du tube, et correspondant à $Z_{tube}$-$Z_{magn}$. Il est à noter que logiquement, la deuxième signature 147 est l'opposée de la première signature 146. Ainsi, on observe deux pics, c'est-à-dire des signatures, de somme nulle avec une énergie importante sur la partie imaginaire.

On y retrouve enfin une troisième signature 148 caractéristique du passage de l'impédance du tube à celle de la plaque, et correspondant à $Z_{plaque}$-$Z_{tube}$. La quatrième signature 149 correspond à la signature du signal de bord supérieur déconvolué, supposé propre. On note ici que la proximité de la bague de magnétite avec le bord inférieur de la plaque entretoise entraîne un mélange entre la deuxième signature 147 et la troisième signature 148.

On constate une très bonne corrélation entre l'allure du signal de bord inférieur déconvolué et l'allure d'un signal idéal. Par conséquent, il est aisé de déduire à partir du signal de bord inférieur déconvolué la configuration du colmatage du passage folié.

La figure 15 montre de façon temporelle, en haut la partie réelle du signal de bord inférieur déconvolué 150, et en bas la partie imaginaire du signal de bord inférieur déconvolué 151, dans la même configuration. La partie réelle 152 et la partie imaginaire 158 du signal de bord supérieur déconvolué sont également représentés, le signal de bord supérieur étant considéré en tant que référence représentant un bord de plaque propre.

On y retrouve pour la partie réelle du signal de bord inférieur déconvolué un pic 153 correspondant au passage de plaque propre, et deux pics 154, 155, de somme nulle, révélateur de la présence de la bague de magnétite. On retrouve deux pics correspondants 156, 157 pour la partie imaginaire du signal de bord inférieur déconvolué. Il est à noter, pour la partie imaginaire, l'absence attendue de pic correspondant au passage du bord de plaque propre.

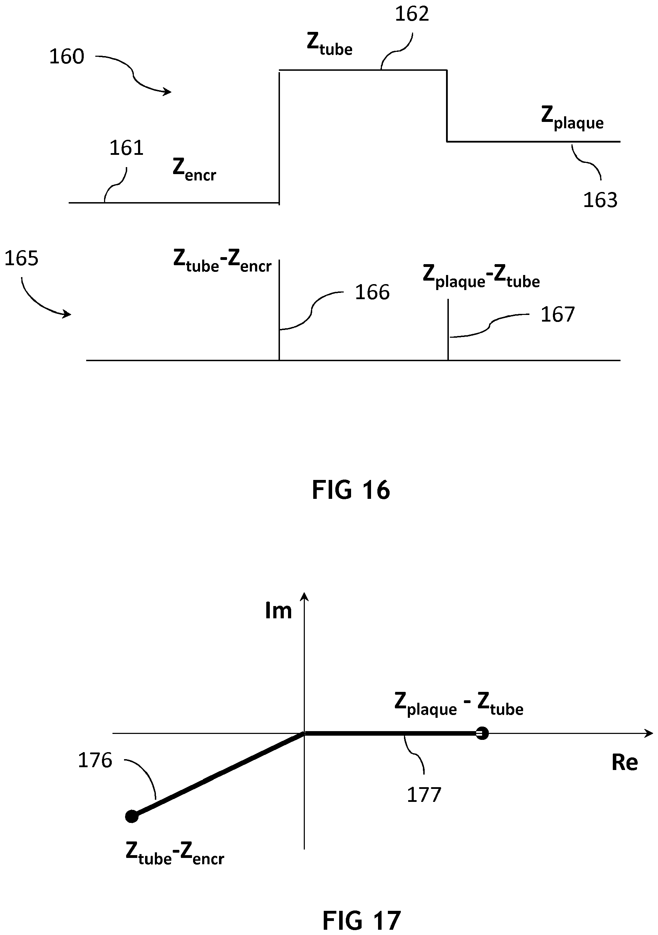

Les figures 16 à 19 illustrent une configuration dans laquelle un tube encrassé sur sa longueur par un dépôt de magnétite présente une rupture d'encrassement en dessous du bord inférieur de la plaque entretoise.

La réponse temporelle idéale de la sonde au voisinage de cette rupture d'encrassement et de ce bord de plaque entretoise, est illustrée par la figure 16. Sur cette figure, la courbe 160 représente l'impédance complexe en mode absolu. Celle-ci comprend une première partie 161 correspondant à une impédance caractéristique du tube encrassé par de la magnétite, notée $Z_{encr}$, une deuxième partie 162 correspondant à une impédance caractéristique du tube en l'absence de magnétite, notée $Z_{tube}$, au niveau de la rupture de l'encrassement du tube, et une troisième partie 163 à une impédance caractéristique de la présence de la plaque entretoise 10 sans magnétite, notée $Z_{plaque}$.

La courbe 165 représente l'impédance complexe en mode différentiel lors du passage de la sonde de cette rupture d'encrassement et du bord de plaque entretoise, en correspondance avec la courbe 160. La rupture d'encrassement par la magnétite se traduit par une première impulsion 166 caractéristique du passage de l'impédance du tube encrassé à celle du tube exempt de magnétite, et correspondant à $Z_{tube}$-$Z_{encr}$. Le passage du rebord de la plaque entretoise se traduit par une seconde impulsion 167 caractéristique du passage de l'impédance du tube à celle de la plaque entretoise, et correspondant à $Z_{paque}$-$Z_{tube}$.

La figure 17 montre une représentation en Lissajous que devrait présenter un signal idéal représentatif de cette configuration. On y retrouve une première signature 176 caractéristique du passage de l'impédance du tube encrassé à celle du tube exempt de magnétite, et correspondant à $Z_{tube}$-$Z_{encr}$. On y retrouve également une seconde signature 177 caractéristique du passage de l'impédance du tube à celle de la plaque, et correspondant à $Z_{paque}$-$Z_{tube}$.

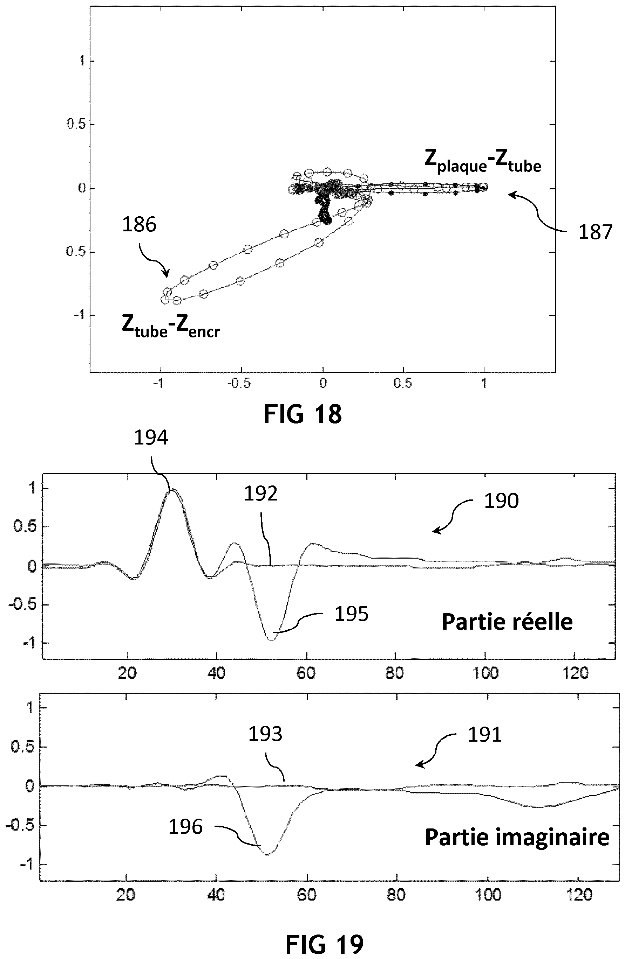

Les figures 18 et 19 illustrent le signal de bord inférieur déconvolué dans la configuration du tube avec une rupture d'encrassement. La figure 18 montre une représentation en Lissajous de ce signal de bord inférieur déconvolué. On y retrouve une première signature 186 caractéristique du passage de l'impédance du tube encrassé à celle du tube exempt de magnétite, et correspondant à $Z_{tube}$-$Z_{encr}$. On y retrouve également une seconde signature 187 caractéristique du passage de l'impédance du tube à celle de la plaque, et correspondant à $Z_{plaque}$-$Z_{tube}$.

On constate une très bonne corrélation entre l'allure du signal de bord inférieur déconvolué et l'allure d'un signal idéal. Par conséquent, il est aisé de déduire à partir du signal de bord inférieur déconvolué la présence d'une rupture d'encrassement du tube.

La figure 19 montre de façon temporelle, en haut la partie réelle du signal de bord inférieur déconvolué 190, et en bas la partie imaginaire du signal de bord inférieur déconvolué 191, dans la même configuration. La partie réelle 192 et la partie imaginaire 193 du signal de bord supérieur déconvolué sont également représentées, le signal de bord supérieur étant considéré en tant que référence représentant un bord de plaque propre.

On y retrouve pour la partie réelle du signal de bord inférieur déconvolué un pic positif 194 correspondant au passage de plaque propre, et un pic négatif 195 correspondant à la présence d'une rupture d'encrassement. On retrouve un pic négatif 196 pour la partie imaginaire du signal de bord inférieur déconvolué. Il est à noter, pour la partie imaginaire, l'absence attendue de pic correspondant au passage du bord de plaque propre.

Les exemples pourraient encore être multipliés. Il peut en être déduit que le procédé selon l'invention permet d'interpréter physiquement les allures du signal complexe déconvolué. Des indicateurs simples peuvent être mis en avant pour déduire l'état des passages foliés d'une plaque entretoise. De fait, le signal complexe déconvolué représente directement l'état de la plaque entretoise à travers les différents types de variation d'impédance qu'il met en évidence.

Pour une plaque entretoise propre, la partie imaginaire du signal complexe déconvolué présente une puissance nulle.

En présence d'un bord de plaque inférieur colmaté:

- la partie imaginaire du signal de bord inférieur déconvolué présente une puissance importante;
- la partie imaginaire du signal de bord inférieur déconvolué ne présente pas un signe constant;
- la partie imaginaire du signal de bord inférieur déconvolué contient autant de puissance dans ses valeurs positives que dans ses valeurs négatives.

On peut également détecter d'autres configurations. Par exemple, dans le cas d'un tube encrassé, une rupture d'encrassement au voisinage de la plaque entretoise peut être détecté par le fait que:

- la partie imaginaire du signal complexe déconvolué a une puissance importante;
- la partie imaginaire du signal complexe déconvolué est de signe constant.

Ainsi, le procédé selon l'invention permet de fortement améliorer l'évaluation de l'état de colmatage des passages foliés, en permettant notamment de distinguer différentes configurations, par exemple une rupture d'encrassement qui pourraient passer pour du colmatage avec des méthodes moins précises.

Plus précisément des indicateurs peuvent être définis pour faciliter l'analyse du signal de bord inférieur. L'analyse du signal de bord inférieur déconvolué peut ainsi comprendre la définition d'indicateurs correspondant à des couples d'extremums de grandeurs physiques de la partie imaginaire du signal de bord inférieur. Par exemple, les indicateurs suivants peuvent être utilisés pour l'estimation du colmatage ou de l'encrassement :

Si on appelle $y+$ (resp $y$-) les valeurs positives (resp. négatives) prises par la partie imaginaire du signal obtenu au voisinage du bord inférieur de la plaque après déconvolution, et si on définit les différentes grandeurs suivantes:

- $E_{Y+}$ / $E_{Y-}$ : énergie de $y_+$ et de $y_-$
- $P_{Y+}$ / $P_{Y-}$ : puissance de $y_+$ et de $y_-$
- $M_{Y+}$ / $M_{Y-}$ : valeur maximale de $y_+$ et de $|y_-|$
- $\Gamma_{Y+}$ / $\Gamma_{Y-}$ : écart-type des valeurs prises par $y_+$ et par $y_-$

Pour chaque couple de grandeurs physiques, $X_{Y+}$ / $X_{Y-}$, avec X correspondant à E, P, M ou $\Gamma$, on définit un indicateur minimal et un indicateur maximal :

-
$$X_{min} = min \{ X_{Y+} , X_{Y-} \}$$

-
$$X_{max} = max \{ X_{Y+} , X_{Y-} \}$$

D'après les interprétations précédentes on a une correspondance simple entre les indicateurs $X_{min}$ , $X_{max}$ et l'état de la plaque :

- Plaque entretoise propre : $X_{min}$ et $X_{max}$ sont faibles;
- Rupture d'encrassement au voisinage du bord inférieur : $X_{min}$ est faible, $X_{max}$ est fort;
- Bord inférieur colmaté : $X_{min}$ et $X_{max}$ sont fort et approximativement égaux.

D'autres indicateurs peuvent également être utilisés, en regardant la projection du signal de bord inférieur déconvolué sur une famille de fonctions (fonctions Gaussiennes par exemple).

L'invention concerne également un produit programme d'ordinateur comprenant des instructions de code de programme enregistrées sur un support utilisable dans un ordinateur pour l'exécution d'étapes de traitement du procédé d'évaluation du colmatage, lorsque ledit programme est exécuté sur un ordinateur.

De fait, le signal de mesure est transmis depuis la sonde à courant de Foucault à une mémoire pour y être stocké en vue de son traitement. Ce traitement du signal de mesure sur lequel porte la présente invention est mis en oeuvre par une unité de traitement munie d'un calculateur, typiquement un ordinateur muni de moyen d'affichage et de communication, par lesquels il acquiert le signal de mesure et transmet les résultats de la mise en oeuvre du procédé d'évaluation du colmatage, ledit ordinateur étant configuré pour mettre en oeuvre le procédé selon l'invention.

**Revendications**

1. Procédé d'évaluation du colmatage de passages d'une plaque entretoise (10) d'un échangeur thermique à tubes (11), lesdits passages (12a, 12b) étant ménagés le long des tubes (11) pour la traversée de la plaque entretoise (10) par un fluide , dans lequel on fait circuler dans un tube (11) dudit échangeur une sonde à courants de Foucault et on mesure avec celle-ci un signal de mesure fonction de l'environnement dans lequel la sonde se trouve, et où pour évaluer le colmatage au niveau du bord aval d'une plaque entretoise:

   - on détermine à partir du signal de mesure un signal de bord inférieur correspondant au passage du bord aval de la plaque entretoise (10) par la sonde,
   - on détermine à partir du signal de mesure un signal de bord supérieur correspondant au passage du bord amont de la plaque entretoise (10) par la sonde,
   - on détermine une estimation de la réponse impulsionnelle de la sonde correspondant au passage de la plaque entretoise (10) par la sonde dans le tube (11) et étant représentative de la réponse de la sonde à courants de Foucault à une variation d'impédance,

   le procédé étant **caractérisé en ce que**:

   - on met en oeuvre une déconvolution (S30) du signal de bord inférieur au moyen de ladite estimation de la réponse impulsionnelle correspondant au passage de la plaque entretoise (10) par la sonde dans le tube (11) et étant représentative de la réponse de la sonde à courants de Foucault à une variation d'impédance,
   - on évalue le colmatage (S33) du passage au niveau du bord aval d'une plaque entretoise en analysant (S32) le signal de bord inférieur ainsi déconvolué au moyen de l'estimation de la réponse impulsionnelle.

2. Procédé selon la revendication précédente, dans lequel la sonde acquiert au moins en partie le signal de mesure en mode différentiel.

3. Procédé selon l'une des revendications précédentes, dans lequel le signal de mesure est un signal multifréquence composé d'au moins deux signaux à des fréquences différentes, et le signal de bord inférieur et le signal de bord supérieur résultent de combinaisons linéaires d'au moins deux signaux à des fréquences différentes dudit signal de mesure.

4. Procédé selon la revendication précédente, dans lequel la combinaison linéaire fait intervenir au moins un coefficient complexe optimisé pour minimiser la puissance de signal le long du tube hors des zones de plaque.

5. Procédé selon la revendication précédente, dans lequel la réponse impulsionnelle de la sonde est estimée à partir du signal de bord supérieur.

6. Procédé selon l'une des revendications précédentes, dans lequel la déconvolution (S30) du signal de bord inférieur au moyen de l'estimation de la réponse impulsionnelle de la sonde est réalisée en utilisant un filtre construit à partir de ladite estimation de réponse impulsionnelle.

7. Procédé selon la revendication précédente, dans lequel la réponse en fréquence du filtre est une approximation de l'inverse de la transformée de Fourier de la réponse impulsionnelle de la sonde.

8. Procédé selon l'une des revendications 6 ou 7, dans lequel le filtre est un filtre de Wiener et la déconvolution est une déconvolution de Wiener.

9. Procédé selon la revendication précédente, dans lequel la réponse en fréquence du filtre de Wiener est de la forme :

$$G[f] = \frac{H^*[f]}{\|H[f]\|^2 + \frac{B[f]}{S[f]}}$$

avec l'exposant * désignant la conjugaison complexe, H[f] la transformée de Fourier de la réponse impulsionnelle de la sonde, S[f] la densité spectrale de puissance du signal à estimer et B[f] la densité spectrale de puissance du bruit.

10. Procédé selon l'une quelconque des revendications précédentes, dans lequel un filtrage (S31) par un filtre passe-bas est appliqué au signal de bord inférieur déconvolué, la fréquence de coupure dudit filtre passe-bas étant déterminée au moyen d'un écart-type d'une fonction gaussienne constituant une approximation de la partie réelle d'une impulsion du signal correspondant au passage d'un bord de plaque entretoise propre par la sonde.

11. Procédé selon l'une des revendications précédentes, dans lequel l'analyse du signal de bord inférieur déconvolué comprend l'analyse de la partie réelle et de la partie imaginaire dudit signal de bord inférieur déconvolué.

12. Procédé selon l'une des revendications précédentes, dans lequel l'analyse du signal de bord inférieur déconvolué comprend la définition d'indicateurs correspondant à des couples d'extremums de grandeurs physiques de la partie imaginaire du signal de bord inférieur.

13. Produit programme d'ordinateur comprenant des instructions de code de programme pour l'exécution des étapes du procédé selon l'une quelconque des revendications précédentes, lorsque ledit programme est exécuté sur un ordinateur.

**Patentansprüche**

1. Verfahren zur Bewertung der Verstopfung der Durchlässe einer Distanzplatte (10) eines Rohrwärmetauschers (11), wobei die Durchlässe (12a, 12b) entlang der Rohre (11) für die Durchquerung der Distanzplatte (10) durch ein Fluid angeordnet sind, wobei in einem Rohr (11) des Wärmetauschers eine Wirbelstromsonde zirkulieren gelassen und mit ihr ein Messsignal gemessen wird in Abhängigkeit von der Umgebung, in der sich die Sonde befindet, und wobei für die Bewertung der Verstopfung an der stromabwärtigen Kante einer Abstandsplatte:

- ausgehend von dem Messsignal ein Unterkantensignal bestimmt wird, das dem Passieren der stromabwärtigen Kante der Distanzplatte (10) durch die Sonde entspricht,
- ausgehend von dem Messsignal ein Oberkantensignal bestimmt wird, das dem Passieren der stromaufwärtigen Kante der Distanzplatte (10) durch die Sonde entspricht,
- eine Schätzung der Impulsantwort der Sonde bestimmt wird, die dem Passieren der Distanzplatte (10) durch die Sonde in dem Rohr (11) entspricht und repräsentativ für die Antwort der Wirbelstromsonde auf eine Änderung der Impedanz ist,

wobei das Verfahren **dadurch gekennzeichnet ist, dass**:

- eine Entfaltung (S30) des Unterkantensignals mithilfe der Schätzung der Impulsantwort durchgeführt wird, die dem Passieren der Distanzplatte (10) durch die Sonde in dem Rohr (11) entspricht und repräsentativ für die Antwort der Wirbelstromsonde auf eine Änderung der Impedanz ist,
- die Verstopfung (S33) des Durchlasses an der stromabwärtigen Kante einer Distanzplatte durch die Analyse (S32) des derart mithilfe der Schätzung der Impulsantwort entfalteten Unterkantensignals bewertet wird.

2. Verfahren nach dem vorstehenden Anspruch, wobei die Sonde zumindest einen Teil des Messsignals im Differenzmodus erfasst.

**3.** Verfahren nach einem der vorstehenden Ansprüche, wobei das Messsignal ein Mehrfrequenzsignal aus mindestens zwei Signalen bei unterschiedlichen Frequenzen ist, und das Unterkantensignal und das Oberkantensignal aus Linearkombinationen von mindestens zwei Signalen bei unterschiedlichen Frequenzen des Messsignals resultieren.

**4.** Verfahren nach dem vorstehenden Anspruch, wobei die Linearkombination mindestens einen optimierten komplexen Koeffizienten beinhaltet, um die Signalleistung entlang des Rohrs außerhalb der Plattenbereiche zu minimieren.

**5.** Verfahren nach dem vorstehenden Anspruch, wobei die Impulsantwort der Sonde ausgehend von dem Oberkantensignal geschätzt wird.

**6.** Verfahren nach einem der vorstehenden Ansprüche, wobei die Entfaltung (S30) des Unterkantensignals mithilfe der Schätzung der Impulsantwort der Sonde unter Verwendung eines Filters durchgeführt wird, der ausgehend von der Schätzung der Impulsantwort konstruiert wird.

**7.** Verfahren nach dem vorstehenden Anspruch, wobei der Filterfrequenzgang ein Näherungswert des Kehrwertes der Fourier-Transformation der Impulsantwort der Sonde ist.

**8.** Verfahren nach einem der Ansprüche 6 oder 7, wobei der Filter ein Wiener-Filter ist und die Entfaltung eine Wiener-Entfaltung ist.

**9.** Verfahren nach dem vorstehenden Anspruch, wobei der Frequenzgang des Wiener-Filters folgendermaßen lautet:

$$G[f] = \frac{H^*[f]}{\|H[f]\|^2 + \frac{B[f]}{S[f]}}$$

wobei der Exponent * die komplexe Konjugation, H[f] die Fourier-Transformation der Impulsantwort der Sonde, S[f] die spektrale Leistungsdichte des zu schätzenden Signals und B[f] die spektrale Leistungsdichte des Rauschens bezeichnet.

**10.** Verfahren nach einem der vorstehenden Ansprüche, wobei eine Filterung (S31) durch ein Tiefpassfilter auf das entfaltete Unterkantensignal angewendet wird, wobei die Grenzfrequenz des Tiefpassfilters mithilfe einer Standardunsicherheit einer Gaußschen Funktion bestimmt wird, die einen Näherungswert des Realteils eines Impulses des Signals darstellt, das dem Passieren einer sauberen Kante der Distanzplatte durch die Sonde entspricht.

**11.** Verfahren nach einem der vorstehenden Ansprüche, wobei die Analyse des entfalteten Unterkantensignals die Analyse des Realteils und des imaginären Teils des entfalteten Unterkantensignals umfasst.

**12.** Verfahren nach einem der vorstehenden Ansprüche, wobei die Analyse des entfalteten Unterkantensignals die Definition von Indikatoren umfasst, die Extremapaaren von physikalischen Größen des imaginären Teils des Unterkantensignals entsprechen.

**13.** Computerprogrammprodukt mit Programmcode-Befehlen für die Ausführung der Schritte des Verfahrens nach einem der vorstehenden Ansprüche, wenn dieses Programm auf einem Computer ausgeführt wird.

## Claims

**1.** Method for evaluating the clogging of the passages of a tube support plate (10) of a tube (11) heat exchanger, said passages (12a, 12b) being made along the tubes (11) for a fluid to pass through the tube support plate (10), in which an eddy current probe is passed through a tube (11) of said exchanger and a measurement signal is measured with said probe according to the environment in which the probe is situated, and where to evaluate the clogging at the downstream edge of a tube support plate:

- a lower edge signal corresponding to the probe passing the downstream edge of the tube support plate (10) is determined from the measurement signal,
- an upper edge signal corresponding to the probe passing the upstream edge of the tube support plate (10) is determined from the measurement signal,
- the impulse response of the probe corresponding to the probe passing the tube support plate (10) in the tube (11) and being representative of the response of the eddy current probe at an impedance variation is estimated,

the method being **characterised in that**:

- the lower edge signal is deconvolved (S30) by means of said impulse response estimation corresponding to the probe passing the tube support plate (10) in the tube (11) and being representative of the response of the eddy current probe at an impedance variation,
- the clogging of the passage at the downstream edge of the spacer plate is evaluated (S33) by analysing (S32) the lower edge signal thus deconvolved by means of the impulse response estimation.

2. Method according to the preceding claim, in which the probe acquires at least in part the measurement signal in differential mode.

3. Method according to one of the preceding claims, in which the measurement signal is a multifrequency signal composed of at least two signals at different frequencies, and the lower edge signal and the upper edge signal result from linear combinations of at least two signals at frequencies different to said measurement signal.

4. Method according to the preceding claim, in which the linear combination involves at least one complex coefficient optimised to minimise the signal power along the tube outside of the plate zones.

5. Method according to the preceding claim, in which the impulse response of the probe is estimated from the upper edge signal.

6. Method according to one of the preceding claims, in which the deconvolution (S30) of the lower edge signal by means of the impulse response estimation of the probe is carried out using a filter constructed from said impulse response estimation.

7. Method according to the preceding claim, in which the frequency response of the filter is an approximation of the inverse of the Fourier transform of the impulse response of the probe.

8. Method according to one of claims 6 or 7, in which the filter is a Wiener filter and the deconvolution is a Wiener deconvolution.

9. Method according to the preceding claim, in which the frequency response of the Wiener filter is of the form:

$$G[f] = \frac{H^*[f]}{\|H[f]\|^2 + \frac{B[f]}{S[f]}}$$

with the exponent * designating the complex conjugation, H[f] the Fourier transform of the impulse response of the probe, S[f] the power spectral density of the signal to be estimated and B[f] the power spectral density of the noise.

10. Method according to any one of the preceding claims, in which a filtering (S31) by a low pass filter is applied to the deconvolved lower edge signal, the cut-off frequency of said low pass filter being determined by means of a standard deviation of a Gaussian function constituting an approximation of the real part of an impulse of the signal corresponding to the probe passing a clean edge of tube support plate.

11. Method according to one of the preceding claims, in which the analysis of the deconvolved lower edge signal comprises the analysis of the real part and the imaginary part of said deconvolved lower edge signal.

12. Method according to one of the preceding claims, in which the analysis of the deconvolved lower edge signal comprises the definition of indicators corresponding to pairs of extremes of physical quantities of the imaginary part of the lower edge signal.

**13.** Computer programme product comprising programme code instructions for the execution of the steps of the method according to any one of the preceding claims, when said programme is run on a computer.

## FIG 1

## FIG 2

identification des parties correspondant à des défauts connus — S20

estimation de la phase et de l'amplitude — S21

détermination d'une transformation — S22

application de la transformation — S23

# FIG 3

```
                                                           ⌒ S0
        ┌─────────────────────┐        ⌒
        │    étalonnage du     │───────╯
        │   signal de mesure   │
        └─────────────────────┘
                   │
                   ▼                                       ⌒ S1
        ┌─────────────────────┐        ⌒
        │   construction d'un  │───────╯
        │  signal de détection │
        └─────────────────────┘
                   │
                   ▼                                       ⌒ S2
        ┌─────────────────────┐        ⌒
        │   détection de pics  │───────╯
        │                      │
        └─────────────────────┘
                   │
                   ▼                                       ⌒ S3
        ┌─────────────────────┐        ⌒
        │  sélection des pics  │───────╯
        │                      │
        └─────────────────────┘
                   │
                   ▼                                       ⌒ S4
        ┌─────────────────────┐        ⌒
        │     Vérification     │───────╯
        │                      │
        └─────────────────────┘
```

signaux extraits

déconvolution par
un filtre de
restauration — S30

Filtrage passe bas — S31

Analyse des signaux — S32

Evaluation du
colmatage — S33

FIG 4

**FIG 5**

**FIG 6**

partie réelle

partie imaginaire

**FIG 7**

80

82

$Z_{magn}$

81    $Z_{tube}$

$Z_{plaque}$

83

84

$Z_{magn}\text{-}Z_{tube}$     85

86

## FIG 8

$Z_{plaque}\text{-}Z_{magn}$

Im

$Z_{magn}\text{-} Z_{tube}$     95

$Z_{plaque}\text{-}Z_{tube}$

Re

96         97

$Z_{plaque}\text{-} Z_{magn}$

## FIG 9

**FIG 10**

**FIG 11**

FIG 12

FIG 13

$Z_{magn}-Z_{tube}$

147      146

149

$Z_{plaque}-Z_{tube}$    148

$Z_{tube}-Z_{magn}$

FIG 14

153   155

152    150

154

Partie réelle

157    151

158

156

Partie imaginaire

FIG 15

**FIG 16**

**FIG 17**

**FIG 18**

**FIG 19**

**EP 2 936 135 B1**

## RÉFÉRENCES CITÉES DANS LA DESCRIPTION

**Documents brevets cités dans la description**

- FR 1256584